# EUROPÄISCHE PATENTSCHRIFT

(11) **EP 3 245 038 B1**
(45) Veröffentlichungstag und Bekanntmachung des Hinweises auf die Patenterteilung: **17.10.2018**
(21) Anmeldenummer: 15825600.8
(22) Anmeldetag: 16.12.2015
(51) Int. Cl.: B29C 45/14

(54) **VERFAHREN ZUR HERSTELLUNG EINES VERBUNDDICHTUNGSELEMENTS**
METHOD OF MANUFACTURING A COMPOSIT SEALING ELEMENT
PROCÉDÉ DE FABRICATION D'UN ÉLÉMENT D' ÉTANCHÉITÉ EN COMPOSITE

(30) Priorität: 13.01.2015 DE 102015100379
(43) Veröffentlichungstag der Anmeldung: 22.11.2017
(73) Patentinhaber: CQLT SaarGummi Technologies S.à.r.l., 5544 Remich (LU)
(72) Erfinder: LORIG, Michael, 82131 Gaudin (DE); BICKEL, Ralf, 66701 Beckingen (DE); SAMANCI, Suleyman, 66687 Wadern-Neukirchen (DE)
(74) Vertreter: Patentanwälte Bernhardt / Wolff Partnerschaft mbB
(86) Internationale Anmeldenummer: PCT/EP2015/002539
(87) Internationale Veröffentlichungsnummer: WO 2016/112944

(56) Entgegenhaltungen:
- JP-A- S57 205 128
- US-A- 4 911 873
- US-A- 5 407 628

## Beschreibung

Die Erfindung betrifft ein Verfahren zur Herstellung eines Verbunddichtungselements, insbesondere für die Bildung einer Dichtung an einer versenkbaren Scheibe eines Fahrzeugfensters, wobei das Verbunddichtungselement aus wenigstens einem extrudierten Elementabschnitt und wenigstens einem durch Spritzgießen in einem Formraum eines Formwerkzeugs gebildeten Elementteil unter Angießen des Elementteils an eine den Formraum begrenzende Endfläche des extrudierten Elementabschnitts hergestellt wird.

Verfahren zur Umspritzung von extrudierten Einlegeteilen an deren Ende sind ganz allgemeine u.a. aus der US 4 911 873, US 5 407 628 und JP S57 205 128 bekannt. Die Länge des durch Schneidbearbeitung aus einem endlos extrudierten Dichtungsprofilstrang gebildeten Elementabschnitts unterliegt aufgrund verschiedener Einflüsse verhältnismäßig großen Schwankungen, die zu entsprechend großen Sollmaßabweichungen beim Verbunddichtungselement führen. Ein erheblicher Teil der durch die Schneidbearbeitung gebildeten Elementabschnitte kann daher nicht weiterverarbeitet werden und unterliegt der Entsorgung als Ausschuss.

Der Erfindung liegt die Aufgabe zugrunde, ein neues Verfahren zur Herstellung von Verbunddichtungselementen mit verringerter Ausschussquote bei der Vorfertigung der extrudierten Elementabschnitte zu schaffen.

Diese Aufgabe wird erfindungsgemäß dadurch gelöst, dass einer Änderung der Abmessungen des Verbunddichtungselements infolge einer Abweichung der Länge (L) des extrudierten Elementabschnitts vom Sollwert durch Änderung der Anordnung der Endfläche des extrudierten Elementabschnitts in Bezug auf den Formraum entgegengewirkt wird.

Vorteilhaft lassen sich extrudierte Elementabschnitte mit verhältnismäßig großen Abweichungen vom Sollwert unter Meidung von Ausschuss dadurch verarbeiten, dass die Abmessungen der durch Spritzgießen hergestellten Elementteile entsprechend geändert werden, so dass die Abmessungen des Verbunddichtungselements als Ganzes im vorgegebenen Toleranzbereich liegen.

Das erfindungsgemäße Verfahren lässt sich derart durchführen, dass die Sollwertabweichung des extrudierten Elementabschnitts vorab ermittelt und anhand der Sollwertabweichung eine Einschublänge (L") des extrudierten Elementabschnitts in das Formwerkzeug bestimmt wird. Die Endfläche ist dann je nach Sollwertabweichung der Länge des extrudierten Elementabschnitts weiter oder weniger weit in das Formwerkzeug eingeschoben, als es dem Sollwert des spritzgegossenen Elements entspricht.

Zweckmäßig wird das Erreichen der Einschublänge (L") durch eine Detektoreinrichtung ermittelt, die eine in definiertem Abstand zu der Endfläche auf den extrudierten Elementabschnitt aufgebrachte Markierung, insbesondere eine Skala, erfasst.

Dabei kann der extrudierte Elementabschnitt mit Hilfe einer z.B. Transportrollen oder einen Roboterarm umfassenden Bewegungseinrichtung in das Formwerkzeug eingeschoben werden.

Vorzugsweise wird die Bewegungseinrichtung durch eine die ermittelte Sollwertabweichung verarbeitende, vorzugsweise einen Computer umfassende Steuereinrichtung automatisch gesteuert, wobei die Steuereinrichtung insbesondere das Signal der Detektoreinrichtung verarbeitet. So kann die Steuereinrichtung den Vorschub des Elementabschnitts automatisch in der gewünschten Position anhalten, wenn das durch die Detektoreinrichtung gelieferte Signal mit einem durch die Steuereinrichtung bestimmten Vorschubsignal übereinstimmt. Alternativ könnte eine Vorschublänge z.B. eines Roboterarms, der in definiertem Abstand von der Endfläche an dem extrudierten Elementabschnitt angreift, anhand der ermittelten Sollwertabweichung voreingestellt werden.

Zweckmäßig berechnet die Steuereinrichtung aus der ermittelten Sollwertabweichung das für die Einschublänge (L") maßgebende Vergleichssignal.

Während die Sollwertabweichung manuell in die Steuereinrichtung eingegeben werden kann, erfasst in einer weiteren bevorzugten Ausführungsform der Erfindung die Steuereinrichtung ein Signal einer Leseeinrichtung, welche eine für die Sollwertabweichung maßgebende Zeichenfolge am extrudierten Elementabschnitt erfasst, vorzugsweise einen Strichcode, der dort angebracht wird, nachdem die Sollwertabweichung bestimmt worden ist.

In einer weiteren Ausführungsform der Erfindung kann an beiden Enden des extrudierten Elementabschnitts ein durch Spritzgießen hergestellter Elementteil angegossen werden, wobei die Sollwertabweichung des extrudierten Elementabschnitts durch Sollwertabweichungen beider spritzgegossener Elementteile ausgeglichen werden kann.

Vorzugsweise erfolgt ein Ausgleich derart, dass sich für beide spritzgegossenen Elementteile die geringstmöglichen Abweichungen vom Sollmaß ergeben.

Die Erfindung wird nachfolgend anhand eines Ausführungsbeispiels und der beiliegenden, sich auf dieses Ausführungsbeispiel beziehenden Zeichnungen weiter erläutert. Es zeigen:
- Fig. 1: ein nach dem erfindungsgemäßen Verfahren hergestelltes Verbunddichtungs-element, und
- Fig. 2: ein die Herstellung des Verbundelements von Fig. 1 erläuternde Darstellung.

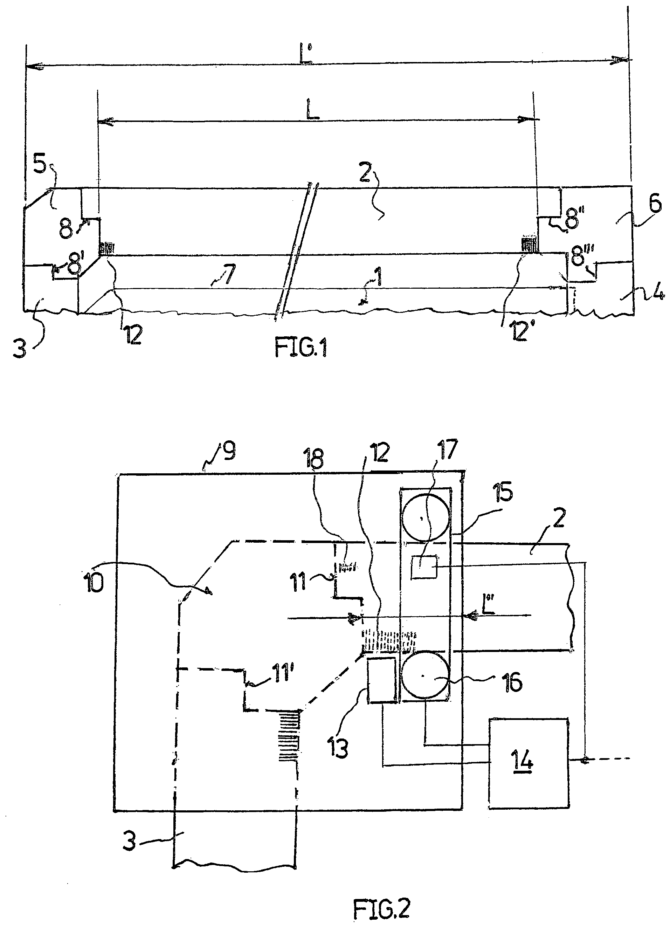

Ein in Fig. 1 ausschnittsweise schematisch dargestelltes Verbunddichtungselement zur Bildung einer Dichtung z.B. an einer versenkbaren Fensterscheibe 1 in einer (nicht gezeigten) Fahrzeugtür umfasst durch Extrusion hergestellte, ein Dichtungsprofil aufweisende Elementabschnitte 2,3 und 4 sowie durch Spritzgießen hergestellte Elementteile 5 und 6. In dem gezeigten Beispiel bestehen die Elementabschnitte 2,3 und 4 aus EPDM, die Elementteile 5 und 6 aus einem thermoplastischen Elastomer (TPE). Es versteht sich, dass hiervon abweichende Materialpaarungen möglich sind, z.B. EPDM/EPDM und TPE/TPE, oder einen Thermoplast enthaltene Materialpaarungen.

Die Fensterscheibe 1 greift mit ihrem Rand in Führungen in dem Verbunddichtungselement ein. Fig. 1 zeigt die Fensterscheibe 1 im leicht abgesenkten Zustand, so dass ihr oberer Rand 7 sichtbar ist.

Die durch Spritzgießen gebildeten Elementteile 5,6 sind bei 8,8',8" und 8"' jeweils an ein Ende der extrudierten Elementabschnitte 2,3 und 4 angegossen. Fig. 2 zeigt schematisch als Beispiel ein zur Herstellung des Elementteils 5 verwendetes Formwerkzeug 9 mit einem Formraum 10. An den Formraum 10 grenzen Endflächen 11,11' in das Formwerkzeug 9 eingeführter Enden der Elementabschnitte 2 und 3 an.

Eine Detektoreinrichtung 13 erfasst bei der Einführung des Elementabschnitts 2 in das Formwerkzeug 9 z.B. optisch eine an dem extrudierten Elementabschnitt 2 angebrachte Skala 12. Die Detektoreinrichtung 13 liefert Messsignale an eine Steuereinrichtung 14, welche eine Transportrollen 16 umfassende Bewegungseinrichtung 15 ansteuert. Eine entsprechende Skala, Detektoreinrichtung sowie Bewegungseinrichtung könnten an dem Formwerkzeug 9 auch für den extrudierten Elementabschnitt 3 vorgesehen sein. Die Detektoreinrichtung und Skala könnten sich auch außerhalb des Formwerkzeugs befinden.

Die extrudierten Elementabschnitte 2 bis 4 des in Fig. 1 gezeigten Verbunddichtungselements entstehen jeweils durch Schneidbearbeitung eines endlos extrudierten Strangs, wobei die Länge L z.B. des hergestellten Elementabschnitts 2 aufgrund, verschiedener Einflüsse verhältnismäßig großen Schwankungen unterliegt. Bei geringem Toleranzbereich für die Gesamtlänge L' des Verbunddichtungselements und konstanten Abmessungen der Elementteile 5,6 ergibt sich dann ein hoher Ausschussanteil bei den durch Schneidbearbeitung hergestellten Elementabschnitten.

Ein solch hoher Ausschussanteil lässt sich vermeiden, wenn z.B. der extrudierte Elementabschnitt 2 jeweils unter Ausgleich einer zuvor ermittelten Abweichung seiner Länge L vom Sollwert entsprechend weit oder weniger weit in das Formwerkzeug 9 eingeführt wird.

Zur Steuerung der Einführungslänge L" wird die jeweils ermittelte Sollwertabweichung der Länge L in die Steuereinrichtung 14 z.B. manuell eingegeben. Die Steuereinrichtung 14 berechnet daraus die jeweilige Einführungslänge L". Da sich die Skala 12 in definiertem Abstand zu der Endfläche 11 des Elementabschnitts 2 befindet, kann sie einen dieser Einführungslänge L" entsprechenden, von der Detektoreinrichtung 13 zu erfassenden Skalenwert bestimmen. Die Bewegungseinrichtung 15 schiebt den Endabschnitt des Elementabschnitts 2 solange vor, bis der berechnete Skalenwert erreicht ist, wobei die Skala 12 in Bezug auf die Detektoreinrichtung 13 eine bestimmte, diesem Skalenwert entsprechende Position einnimmt.

Zusätzlich zur berechneten Einführungslänge L" kann aus der ermittelten Sollwertabweichung auch ein Steuersignal für die Einspritzeinrichtung, insbesondere ein Dosierungssignal, berechnet werden.

Es versteht sich, dass die Herstellung und Anbindung des Weiteren durch Spritzgießen herzustellenden Elementteils 6 in gleicher Weise wie vorangehend beschrieben erfolgt. Der Ausgleich der Sollwertabweichung der Länge L kann so erfolgen, dass die jeweilige Steuereinrichtung 14 die Einschubtiefe so berechnet, dass das durch Spritzgießen hergestellte Elementteil 5 bzw. 6 seinen Sollmaßen möglichst nahe kommt.

Wie Fig. 2 ferner erkennen lässt, könnte die Eingabe der Sollwertabweichung in die Steuereinrichtung 14 auch automatisch über ein Lesegerät 17 erfolgen, das einen die Sollwertabweichung beinhaltenden Strichcode 18 erfasst, welcher nach Vermessung des durch Schneidbearbeitung hergestellten Elementabschnitts 2 auf den Elementabschnitt 2 aufgebracht wird.

Es versteht sich, dass die Steuerung 14 auch zur Steuerung eines Werkzeugs zur Herstellung des Elementteils 6 einsetzbar wäre. Auch zur Steuerung der Einführungslänge L" der Elementabschnitte 3 und 4 in die betreffenden Formwerkzeuge könnte die zentrale Steuerung 14 einsetzbar sein.

Es versteht sich ferner, dass der Strichcode 12 nach Herstellung der Elementabschnitte 3 bis 4 durch Schneidbearbeitung in definiertem Abstand zu den Endflächen 11,11' anzubringen ist. Alternativ könnte sich ein Strichcode über die gesamte Länge des endlos extrudierten Strangs, aus denen die Elementabschnitte ausgeschnitten werden, erstrecken, wobei bei geringem Abstand der Skalenstriche Schwankungen der Entfernung des ersten Skalenstrichs zur Endfläche 11 des Elementabschnitts in Kauf genommen werden können.

## Patentansprüche

1. Verfahren zur Herstellung eines Verbunddichtungselements, insbesondere für die Bildung einer Dichtung an einer versenkbaren Scheibe (1) eines Fahrzeugfensters, wobei das Verbunddichtungselement aus wenigstens einem extrudierten Elementabschnitt (2-4) und wenigstens einem durch Spritzgießen in einem Formraum (10) eines Formwerkzeugs (9) gebildeten Elementteil (5,6) unter Angießen des Elementteils (5,6) an eine den Formraum (10) begrenzende Endfläche (11) des extrudierten Elementabschnitts (2-4) hergestellt wird,
**dadurch gekennzeichnet,**
**dass** einer Änderung der Abmessungen des Verbunddichtungselements infolge einer Abweichung der Länge (L) des extrudierten Elementabschnitts (2-4) vom Sollwert durch Änderung der Anordnung der Endfläche (11) des extrudierten Elementabschnitts (2-4) in Bezug auf den Formraum (10) entgegengewirkt wird.

2. Verfahren nach Anspruch 1,
**dadurch gekennzeichnet,**
**dass** die Sollwertabweichung des extrudierten Elementabschnitts (2-4) ermittelt und anhand der Sollwertabweichung eine Einschublänge (L") des extrudierten Elementabschnitts (2-4) in das Formwerkzeug (9) bestimmt wird.

3. Verfahren nach Anspruch 2,
**dadurch gekennzeichnet,**
**dass** das Erreichen der Einschublänge (L") durch eine Detektoreinrichtung (13) ermittelt wird, die eine in definiertem Abstand zu der Endfläche (11) an dem extrudierten Elementabschnitt (2-4) vorgesehene Markierung, insbesondere Skala (12), erfasst.

4. Verfahren nach einem der Ansprüche 1 bis 3,
**dadurch gekennzeichnet,**
**dass** der extrudierte Elementabschnitt (2-4) mit Hilfe einer Bewegungseinrichtung (15) in das Formwerkzeug (9) eingeführt wird.

5. Verfahren nach Anspruch 4,
**dadurch gekennzeichnet,**
**dass** die Bewegungseinrichtung (15) durch eine die ermittelte Sollwertabweichung verarbeitende Steuereinrichtung (14) gesteuert wird.

6. Verfahren nach Anspruch 5,
**dadurch gekennzeichnet,**
**dass** die Steuereinrichtung (14) ferner das Signal der Detektoreinrichtung (13) verarbeitet.

7. Verfahren nach Anspruch 6,
**dadurch gekennzeichnet,**
**dass** die Steuereinrichtung (14) aus der ermittelten Sollwertabweichung ein für die Einschublänge (L") maßgebendes Signal berechnet.

8. Verfahren nach einem der Ansprüche 5 bis 7,
**dadurch gekennzeichnet,**
**dass** die Steuereinrichtung (14) ferner ein Signal einer Leseeinrichtung (17) empfängt, welche ein für die Sollwertabweichung maßgebendes, auf den extrudierten Strangabschnitt (2-4) aufgebrachte Zeichenfolge, insbesondere einen Strichcode, erfasst.

9. Verfahren nach einem der Ansprüche 1 bis 8,
**dadurch gekennzeichnet,**
**dass** an beide Enden des extrudierten Elementabschnitts (2-4) ein durch Spritzgießen hergestellter Elementteil (5,6) angegossen wird.

10. Verfahren nach Anspruch 9,
**dadurch gekennzeichnet,**
**dass** die Sollwertabweichung des extrudierten Elementabschnitts (2-4) durch Sollwertabweichungen beider spritzgegossener Elementteile (5,6) ausgeglichen wird.

11. Verfahren nach Anspruch 10,
**dadurch gekennzeichnet,**
**dass** ein Ausgleich derart erfolgt, dass die Sollwertabweichung der beiden Elementteile (5,6) jeweils minimal ist.

## Claims

1. Method for producing a composite sealing element, in particular for forming a sealing arrangement for a pane (1) that can be lowered in a vehicle window, wherein the composite sealing element is produced from at least one extruded element section (2-4) and at least one element part (5,6), which is formed by means of an injection-molding procedure in a mold chamber (10) of a molding tool (9), whilst molding the element part (5,6) onto an end face (11) of the extruded element section (2-4), said end face delimiting the mold chamber (10),
**characterized in that**
a change in the dimensions of the composite sealing element as a result of a deviation in the length (L) of the extruded element section (2-4) from the desired value is counteracted by means of changing the arrangement of the end face (11) of the extruded element section (2-4) with regard to the mold chamber (10).

2. Method according to Claim 1,
**characterized in that**
the desired value deviation of the extruded element section (2-4) is ascertained and with reference to the desired value deviation an insertion length (L") of the extruded element section (2-4) into the molding tool (9) is determined.

3. Method according to Claim 2,
**characterized in that**
a detector device (13) detects that the insertion length (L") has been achieved, wherein said detector device detects a marking, in particular a scale (12), which is applied at a defined spacing with respect to the end face (11) on the extruded element section (2-4).

4. Method according to any one of Claims 1 to 3,
**characterized in that**
the extruded element section (2-4) is inserted into the molding tool (9) with the aid of a movement device (15).

5. Method according to Claim 4,
**characterized in that**
the movement device (15) is controlled by means of a control unit (14) that processes the ascertained desired value deviation.

6. Method according to Claim 5,
**characterized in that**
the control unit (14) moreover processes the signal from the detector device (13).

7. Method according to Claim 6,
**characterized in that**
the control unit (14) uses the ascertained desired value deviation to calculate a signal that is decisive for the insertion length (L").

8. Method according to any one of Claims 5 to 7,
**characterized in that**
the control unit (14) moreover receives a signal from a reader device (17) that detects a sequence of markings, in particular a bar code, which is applied to the extruded element section (2-4) and is decisive for the desired value deviation.

9. Method according to any one of Claims 1 to 8,
**characterized in that**
an element part (5,6) that is produced by means of an injection-molding procedure is molded onto both ends of the extruded element section (2-4).

10. Method according to Claim 9,
**characterized in that**
the desired value deviation of the extruded element section (2-4) is compensated for by means of desired value deviations of two injection-molded element parts (5,6).

11. Method according to Claim 10,
**characterized in that**
a compensation procedure is performed in such a manner that the desired value deviation of the two element parts (5,6) is in each case minimal.

## Revendications

1. Procédé de fabrication d'un élément d'étanchéité composite, en particulier pour la formation d'un joint au niveau d'une vitre escamotable (1) d'une fenêtre de véhicule, l'élément d'étanchéité composite étant fabriqué à partir d'au moins une section d'élément (2-4) extrudée et d'au moins une partie d'élément (5, 6) formée par moulage par injection dans un espace de moulage (10) d'un outil de moulage (9) tout en moulant la partie d'élément (5, 6) sur une surface d'extrémité (11) adjacente à l'espace de moulage (10) de la section d'élément (2-4) extrudée, **caractérisé en ce qu'**une modification des dimensions de l'élément d'étanchéité composite suite à un écart de la longueur (L) de la section d'élément (2-4) extrudée par rapport à la valeur de consigne est contrecarrée par la modification de la disposition de la surface d'extrémité (11) de la section d'élément (2-4) extrudée par rapport à l'espace de moulage (10).

2. Procédé selon la revendication 1, **caractérisé en ce que** l'écart par rapport à la valeur de consigne de la section d'élément (2-4) extrudée est déterminé et, à l'aide de l'écart par rapport à la valeur de consigne, une longueur d'insertion (L") de la section d'élément (2-4) extrudée dans l'outil de moulage (9) est déterminée.

3. Procédé selon la revendication 2, **caractérisé en ce que** le fait d'atteindre la longueur d'insertion (L") est déterminé par un dispositif de détection (13), qui détecte un marquage, en particulier une échelle (12), disposé à une distance définie par rapport à la surface d'extrémité (11) sur la section d'élément (2-4) extrudée.

4. Procédé selon l'une quelconque des revendications 1 à 3, **caractérisé en ce que** la section d'élément (2-4) extrudée est introduite à l'aide d'un dispositif de déplacement (15) dans l'outil de moulage (9).

5. Procédé selon la revendication 4, **caractérisé en ce que** le dispositif de déplacement (15) est commandé par un dispositif de commande (14) traitant l'écart déterminé par rapport à la valeur de consigne.

6. Procédé selon la revendication 5, **caractérisé en ce que** le dispositif de commande (14) traite en outre le signal du dispositif de détection (13).

7. Procédé selon la revendication 6, **caractérisé en ce que** le dispositif de commande (14) calcule un signal pertinent pour la longueur d'insertion (L") à partir de l'écart déterminé par rapport à la valeur de consigne.

8. Procédé selon l'une quelconque des revendications 5 à 7, **caractérisé en ce que** le dispositif de commande (14) reçoit en outre un signal provenant d'un dispositif de lecture (17), qui détecte une suite de caractères, en particulier un code-barres, pertinent pour l'écart par rapport à la valeur de consigne, appliqué sur la section de brin (2-4) extrudée.

9. Procédé selon l'une quelconque des revendications 1 à 8, **caractérisé en ce qu'**une partie d'élément (5, 6) fabriquée par moulage par insertion est moulée sur les deux extrémités de la section d'élément (2-4) extrudée.

10. Procédé selon la revendication 9, **caractérisé en ce que** l'écart par rapport à la valeur de consigne de la section d'élément (2-4) extrudée est compensé par des écarts par rapport à la valeur de consigne des deux parties d'élément (5, 6) moulées par injection.

11. Procédé selon la revendication 10, **caractérisé en ce que** la compensation est réalisée de manière telle que l'écart par rapport à la valeur de consigne des deux parties d'élément (5, 6) est à chaque fois minimal.
